(19) **Europäisches Patentamt**
**European Patent Office**
**Office européen des brevets**

(11) **EP 2 318 230 B1**

(12) **EUROPEAN PATENT SPECIFICATION**

(45) Date of publication and mention
of the grant of the patent:
**01.03.2017 Bulletin 2017/09**

(51) Int Cl.:
***B60L 15/20*** (2006.01)    ***H02P 9/00*** (2006.01)
***F16H 59/18*** (2006.01)

(21) Application number: **09809261.2**

(86) International application number:
**PCT/CN2009/073623**

(22) Date of filing: **28.08.2009**

(87) International publication number:
**WO 2010/022676 (04.03.2010 Gazette 2010/09)**

(54) **ACCELERATOR ACCELERATING CONTROL DEVICE OF FOUR-WHEEL DRIVE ELECTRIC VEHICLE AND METHOD THEREOF**

STEUERGERÄT FÜR DEN BESCHLEUNIGER EINES ELEKTROFAHRZEUGS MIT VIERRADANTRIEB UND VERFAHREN DAFÜR

DISPOSITIF DE COMMANDE D' ACCELERATION D' UN ACCELERATEUR D' UN VEHICULE ELECTRIQUE A QUATRE ROUES MOTRICES ET SON PROCEDE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.08.2008   CN 200810210168**

(43) Date of publication of application:
**11.05.2011   Bulletin 2011/19**

(73) Proprietor: **Byd Company Limited**
**Shenzhen 518118 (CN)**

(72) Inventors:
• **JIANG, Xianhong**
**Guangdong 518118 (CN)**
• **ZHOU, Xuguang**
**Guangdong 518118 (CN)**
• **TANG, Xiaohua**
**Guangdong 518118 (CN)**

(74) Representative: **Gulde & Partner**
**Patent- und Rechtsanwaltskanzlei mbB**
**Wallstraße 58/59**
**10179 Berlin (DE)**

(56) References cited:
| | |
|---|---|
| **EP-A2- 0 622 264** | **EP-A2- 0 895 347** |
| **EP-A2- 1 393 953** | **WO-A1-2007/141980** |
| **CN-A- 101 200 170** | **JP-A- 2004 166 386** |
| **US-A- 5 289 890** | **US-A- 5 581 465** |
| **US-A- 5 731 669** | |

## Description

### FIELD OF THE INVENTION

The present invention relates to vehicle control, more particularly to a method of controlling an accelerator of a four-wheel drive electric vehicle and an accelerator accelerating control device of the four-wheel drive electric vehicle.

### BACKGROUND OF THE INVENTION

Now, the vehicles become an absolutely necessary transportation tool for people trip, such as the common fuel vehicles, new energy electric vehicles. The power control strategy is very important for the operation and driving of the vehicles.

Document EP 0 622 264 A2 discloses an electric drive system comprising two different types of motors.

Document WO2007/141980A1 relates to a drive system for an electrically driven dump truck. Generally, the output power is controlled by the torque in the electric vehicles. When depressing the accelerator pedal, the motor controller of the electric vehicle calculates the output torque of the motor according to the depressing degree of the accelerator pedal to control the vehicle to accelerate. The output torque of the common motor has a linear relationship with the depressing degree of the accelerator pedal, namely $T_0 = T * \gamma$. $T_0$ is the output torque of the motor, T is the maximum output torque of the motor at current speed which can be obtained by the corresponding curve relationship of the maximum output torque of the motor and the speed, $\gamma$ is the depressing degree of the accelerator pedal. So the output torque of the motor is determined by the depressing degree of the accelerator pedal. When accelerating, if a bigger output torque is needed the depressing degree of the accelerator pedal should be pushed harder. The power performance of the vehicle is determined by the accelerator pedal precision. When utilizing the detected depressing degree of the accelerator pedal, the motor controller should eliminate the noise of the depressing degree of the accelerator pedal like wave filtering to ensure that the calculating depressing degree of the accelerator pedal correctly reflects the operation of the operator. But the method of controlling the power output by the depressing degree of the accelerator pedal is difficult to respond the operation of the operator quickly and correctly.

However, for the four-wheel drive pure-electric vehicle, there is a higher demand for the power performance of the whole vehicle. Thus the power control strategy should know the driver's act meaning in a short time and execute the corresponding act quickly. The power of the four-wheel electric vehicle is always controlled by the main drive motor and the auxiliary drive motor. Now the main drive motor and the auxiliary drive motor use the power output method of the traditional vehicles that the output torque is controlled by the depressing degree of the accelerator pedal. In this method for the auxiliary drive motor it is difficult to respond the driver's act quickly and reach the high precision of the power output, also this accelerator control strategy is a waste for the whole vehicle energy.

### SUMMARY OF THE INVENTION

In viewing thereof, the present invention is directed to solve at least one of the problems existing in the prior art. Accordingly, it is necessary to provide a method of controlling an accelerator of a four-wheel drive electric vehicle so that the vehicle may response quickly to a driver thereof. Further, the method may enhance power output precision. Still further, it is needed to provide an accelerator accelerating control device of a four-wheel drive electric vehicle.

According to an embodiment of the invention, a method of controlling an accelerator of a four-wheel drive electric vehicle is provided. The method comprises the following steps: controlling power output of the vehicle by a sum of an output torque of a main drive motor and an auxiliary drive motor with the output torque of the main drive motor being determined by a depressing degree of an accelerator pedal. The output torque $T_0$ of the auxiliary drive motor is determined by: obtaining a torque calculating factor $F$ being a cumulative value of an acceleration $a$ of the accelerator; determining a maximum output torque $T$ of the auxiliary drive motor at a current speed of the vehicle; and calculating the output torque $T_0$ of the auxiliary drive motor varying between 0 and T based on the torque calculating factor $F$ and the maximum output torque $T$ of the auxiliary drive motor at the current speed with the output torque $T_0$ of the auxiliary drive motor being increased as the torque calculating factor $F$ increases; and wherein the step of determining the torque calculating factor ($F$) comprising the following steps:

obtaining a start depressing degree ($\gamma_1$) of the accelerator pedal and an end depressing degree ($\gamma_0$) of the accelerator pedal in a period ($\Delta T$) of time; calculating the accelerator acceleration ($a$) based on a formula of:

$$ a = \frac{\gamma_0 - \gamma_1}{\Delta T}; $$

and
obtaining the torque calculating factor (F) by accumulating the accelerations ($a$) of the accelerator calculated in a continuous plurality of the periods. According to another embodiment of the invention, an accelerator accelerating control device of a four-wheel drive electric vehicle is provided, comprising: a sensor for sensing a depressing degree of an accelerator pedal; a speed sensor for detecting a current speed of the electric vehicle; a motor controller connected with the sensor for sensing the depressing degree of the accelerator pedal and the speed sensor for controlling the output torque of the main motor based on the depressing degree detected and the current speed and for determining an output torque of the auxiliary drive motor and controlling the output torque thereof with a sum of the output torque of the main motor and the output torque of the auxiliary drive motor being used for controlling the power output of the vehicle. The control device determines the output torque $T_0$ of the auxiliary drive motor by: obtaining a torque calculating factor $F$ being a cumulative value of an acceleration $a$ of the accelerator; determining a maximum output torque $T$ of the auxiliary drive motor at a current speed of the vehicle; and calculating the output torque $T_0$ of the auxiliary drive motor varying between 0 and T based on the torque calculating factor $F$ and the maximum output torque $T$ of the auxiliary drive motor at the current speed with the output torque $T_0$ of the auxiliary drive motor being increased as the torque calculating factor $F$ increases; and wherein the torque calculating factor ($F$) is determined by the motor controller (3) by:

obtaining a start depressing degree ($\gamma_1$) of the accelerator pedal and an end depressing degree ($\gamma_0$) of the accelerator pedal in a period ($\Delta T$) of time;
calculating the accelerator acceleration ($a$) based on a formula of:

$$a = \gamma_0 - \gamma_1 \Big/ \Delta T \, ;$$

and
obtaining the torque calculating factor ($F$) by accumulating the accelerations ($a$) of the accelerator calculated in a continuous plurality of the periods.

Therefore, the present invention discloses an accelerator accelerating control method of a four-wheel drive electric vehicle and the device thereof. It applies the method of using the accelerations of the accelerator to calculate the torque calculating factor to determine the output torque of the auxiliary drive motor, which may omit complex steps of eliminating the noise of the determined depressing degree of the accelerator pedal; and has the advantages of quick response for the driver's purpose and high performance of the power output.

Because calculating the accelerator acceleration of each period and then accumulating to obtain the torque calculating factor, the accelerator accelerating control method of a four-wheel drive electric vehicle and the device thereof in present invention may provide the driver thereof with quicker response and omit the complex step of eliminating noises of the depressing degree of the accelerator pedal, which saves the response time. It also has the advantages of quick response for the driver's meaning and high performance of the power. After determining the output torque of the auxiliary drive motor, the torque calculating factor is attenuated to zero which may avoid energy waste during long-time operation of the auxiliary drive motor to save the energy of the whole vehicle.

Additional aspects and advantages of the embodiments of present invention will be given in part in the following descriptions, become apparent in part from the following descriptions, or be learned from the practice of the embodiments present invention.

DESCRIPTION OF THE DRAWINGS

These and other aspects and advantages of the invention will become apparent and more readily appreciated from the following descriptions taken in conjunction with the drawings in which:

Figure 1 is a flow chart of a method of controlling an accelerator of a four-wheel drive electric vehicle according to an embodiment of the invention; and
Figure 2 is a block diagram of an accelerator accelerating control device of a four-wheel drive electric vehicle according to an embodiment of the invention.

DETAILED DESCRIPTION OF THE PREFERRED EMBODIMENT

Reference will be made in detail to embodiments of the present invention. The embodiments described herein with reference to drawings are explanatory, illustrative, and used to generally understand the present invention. The embodiments shall not be construed to limit the present invention. The same or similar elements and the elements having same or similar functions are denoted by like reference numerals throughout the descriptions.

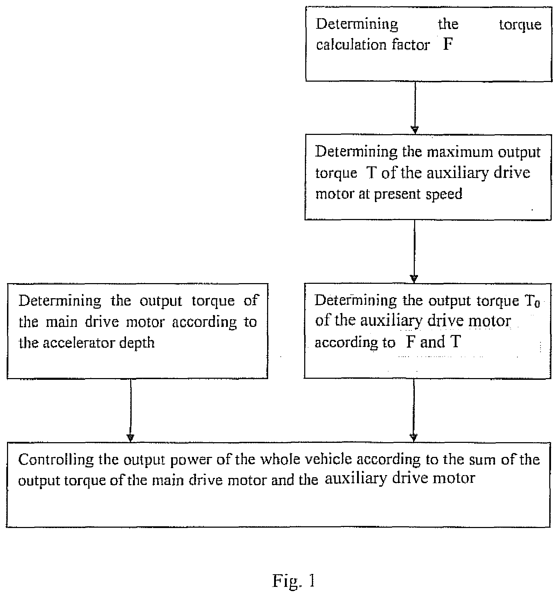

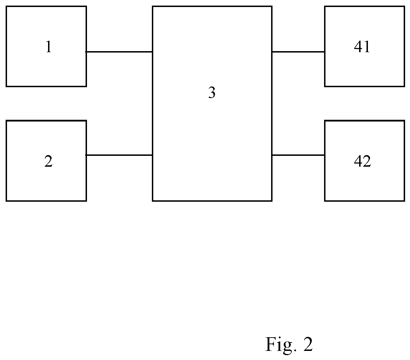

As shown in figures 1 and 2, the present invention discloses an accelerator controlling method of a four-wheel drive electric vehicle. The method comprises the following steps:

controlling power output of the vehicle by a sum of an output torque of a main drive motor 41 and an output torque of an auxiliary drive motor 42 with the output torque of the main drive motor, which is determined by a depressing degree of an accelerator pedal. The output torque $T_0$ of the auxiliary drive motor is determined by:

obtaining a torque calculating factor $F$, which is the cumulative value of the acceleration $a$ of the accelerator; determining a maximum output torque $T$ of the auxiliary drive motor 42 at the current speed of the vehicle; and calculating the output torque $T_0$ of the auxiliary drive motor 42 varying between 0 and $T$ based on the torque calculating factor $F$ and the maximum output torque $T$ of the auxiliary drive motor 42 at the current speed with the output torque $T_0$ of the auxiliary drive motor being increased as the torque calculating factor $F$ increases.

As known in the art, the four-wheel drive electric vehicle runs in a full-time mode in the whole operating process. In the full-time mode, the main drive motor 41 detects the status of the whole vehicle in real time to determine if the vehicle runs in a condition of starting, accelerating or climbing. And when runs in the full-time mode, the output torque of the auxiliary drive motor 42 is zero except when the whole vehicle is accelerating. Namely, in the full-time mode, the output power of the whole vehicle is provided substantially by the main drive motor 41.

In the method according to an embodiment of the invention, the step of determining the torque calculating factor $F$ comprises the following steps: obtaining a start depressing degree $\gamma_1$ of the accelerator pedal and an end depressing degree $\gamma_0$ of the accelerator pedal in a period of $\Delta T$; calculating the accelerator acceleration $a$ according to the formula of:

$$a = \frac{\gamma_0 - \gamma_1}{\Delta T};$$

and obtaining the torque calculating factor $F$ by accumulating the accelerations $a$ of the accelerator calculated in the continuous plurality of the periods.

The period $\Delta T$ is about 100μs to 1000μs. Normally, a per-unit value of an electric power system is used for calculation and the master control period, usually being about 100μs, is chosen as a reference. In the above formula, the per-unit value of the perid $\Delta T$ is used accordingly, namely the ratio of the actual period and the master control period is used for calculation varying from 1 to 10. The accelerations $a$ of the accelerator is accumulated by substantially 5000 to 10000 periods. The period $\Delta T$ may be chosen as the master control period of the motor controller 3, thus the per-unit value of the period $\Delta T$ for the calculation is 1. Each acceleration $a$ of the accelerator calculated in 10000 periods should be accumulated. Because the master control period of the motor is relatively short, such as the 100μs as mentioned above, the true intent of an operator of the vehicle may be better reflected by choosing a suitable time period to accumulate the accelerations $a$ of the accelerator in the plurality of the periods.

According to an embodiment of the invention, when the torque calculating factor $F$ is equal to or exceeds a limitation value, the accumulating of the accelerations $a$ of the accelerator in the plurality of periods has to be suspended. And the limitation value is used as the torque calculating factor $F$. The limitation value is about 0.9 to 1. In one embodiment, the torque calculating factor $F$ is 0.9. The torque calculating factor $F$ should be limited so that the torque calculating factor $F$ may be gradually attenuated to zero in a certain time to avoid and/or reduce energy consumption for the long time operation of the auxiliary drive motor 42.

The step of determining the maximum output torque $T$ of the auxiliary drive motor 42 at the current speed may comprise the following steps: obtaining the current speed; and determining the maximum output torque $T$ of the auxiliary drive motor 42 at the current speed according to the corresponding curve relationship of the maximum output torque and the speed. The maximum output torque $T$ of the auxiliary drive motor 42 is different for different current speed. There is a corresponding curve relationship between the maximum output torque of the auxiliary drive motor 42 and the current speed. The curve relationship may be determined beforehand by experiment.

According to the torque calculating factor $F$ and the maximum output torque $T$ of the auxiliary drive motor 42 at the current speed, the output torque $T_0$ of the auxiliary drive motor 42 is calculated by multiplying the torque calculating factor $F$ with the maximum output torque $T$ of the auxiliary drive motor 42 at the current speed:

$$T_0 = T * F$$

In this way, when the accelerators pedal changes, the auxiliary drive motor 42 may be involved in the power output quickly. According to the linear property of the above formula, the positive torque calculating factor $F$ may make the auxiliary drive motor 42 to output torque, while the negative torque calculating factor $F$ may make the auxiliary drive motor 42 to attenuate the output torque. The auxiliary drive motor 42 may respond quickly to the operation of the operator. And the performance of the whole vehicle is ameliorated or improved accordingly. The output torque of the whole vehicle shall be the sum of the output torque of the main drive motor 41 and the output torque $T_0$ of the auxiliary drive motor 42.

According to an embodiment of the invention, after the auxiliary drive motor 42 outputs the calculated torque $T_0$, the torque calculation factor $F$ is attenuated to zero. According to an embodiment of present invention, the torque calculating factor $F$ is limit to no more than the limitation value. In this way, the torque calculating factor $F$ may gradually decrease to zero by itself in certain limit time to reduce the energy output in normal running. Because the auxiliary drive motor 42 has no cooling loop, there should be certain limit on the operation of the auxiliary drive motor 42, such as attenuating gradually the torque calculating factor $F$ to zero to further decrease the output torque of the auxiliary drive motor 42 to zero gradually as mentioned above, which can reduce the energy consumption of the whole vehicle and extend the service time of the auxiliary drive motor 42. If in a damping process of the vehicle, when the driver releases the accelerator pedal, the attenuating speed of the torque calculating factor F is accelerated to push the auxiliary output torque to zero as soon as possible.

As shown in Figure 2, the invention further discloses an accelerator accelerating control device of a four-wheel drive electric vehicle comprising a sensor 1, a speed sensor 2, and a motor controller 3. The sensor 1 is used to sense a depressing degree of an accelerator pedal. The speed sensor 2 is used to detect the current speed of the electric vehicle. The motor controller 3 is connected with the sensor 1 for sensing the depressing degree of the accelerator pedal and the speed sensor 2 for controlling the output torque of the main motor 41 based on the depressing degree detected and the current speed and for determining an output torque of the auxiliary drive motor 42 and controlling the output torque thereof with a sum of the output torque of the main motor 41 and the output torque of the auxiliary drive motor 42 being used for controlling the power output of the vehicle.

The control device determines the output torque $T_0$ of the auxiliary drive motor 42 by: obtaining a torque calculating factor F being a cumulative value of an acceleration a of the accelerator; determining a maximum output torque T of the auxiliary drive motor 42 at a current speed of the vehicle; and calculating the output torque To of the auxiliary drive motor 42 varying between 0 and T based on the torque calculating factor F and the maximum output torque T of the auxiliary drive motor 42 at the current speed with the output torque To of the auxiliary drive motor 42 being increased as the torque calculating factor F increases.

The torque calculating factor F is determined by the motor controller 3 by: obtaining a start depressing degree $\gamma_1$ of the accelerator pedal and an end depressing degree $\gamma_0$ of the accelerator pedal in a period of $\Delta T$; calculating the accelerator acceleration a based on a formula of:

$$a = \frac{\gamma_0 - \gamma_1}{\Delta T};$$

and

obtaining the torque calculating factor F by accumulating the accelerations a of the accelerator calculated in a continuous plurality of the periods.

In one embodiment, the period $\Delta T$ is about $100\mu s$ to $1000\mu s$, and there are substantially 5000 to 10000 periods to accumulate the accelerations a of the accelerator.

In other embodiment, the accumulation of the calculated acceleration a of the accelerator is suspended in the plurality of periods and a limitation value is used as the torque calculating factor F ranging from 0.9 to 1 when the torque calculating factor F is equal to or exceeds the limitation value.

In the accelerator acceleration control device according to an embodiment of the present invention, the motor controller 3 can determine the torque calculating factor F and the maximum output torque T of the auxiliary drive motor 42 at the current speed, and calculates the output torque To of the auxiliary drive motor 42 according to the torque calculating factor F and the maximum output torque T of the auxiliary drive motor 42 by the same methods as stated in the corresponding steps of the present invention. The motor controller 3 may be comprises a programmable microprocessor and an external circuit thereof. Generally, the main drive motor 41 and the auxiliary drive motor 42 may be carried out by an integrated-box motor controller 3. The integrated-box motor controller 3 may comprise a motor control board, a drive board and an IPM intelligent module, etc.

As known in the art, no matter in a mechanical or fuel pressure accelerator system, there usually is a sensor 1 to sense a depressing degree of the accelerator pedal and transfers the signal of the depressing degree to the motor controller 3, which will be detected by the motor controller 3.

In light of the accelerator accelerating control device of the four-wheel drive electric vehicle of present invention, the depressing degree of the accelerator pedal is detected by the sensor 1 for sensing the depressing degree of the accelerator pedal and is transmitted to the motor controller 3. The depressing degree of the accelerator pedal is monitored by the motor controller 3. According to an embodiment of the invention, the monitoring precision is substantially 1% , the period $\Delta T$ may be a master control period of the motor controller 3 which is $100\mu s$. The motor controller 3 firstly obtains the master control period, i.e. obtains the start depressing degree $\gamma_1$ of the accelerator pedal and the end depressing degree $\gamma_0$ of the accelerator pedal in the time period of $100\mu s$, and the accelerator pedal acceleration a is calculated by the following formula: $a=\gamma_0-\gamma_1/\Delta T$. In a continuous 10000 master control periods, namely 1s, 10000 accelerations a of the accelerator pedal are calculated which are accumulated to obtain the torque calculating factor F for calculating the output torque $T_0$ of the auxiliary drive motor. And the torque calculating factor F is restricted to be no more than the limitation value. The current speed of the electric vehicle is detected by the speed sensor 2. According to the detected current speed of the electric vehicle and the corresponding curve relationship of the maximum output torque of the auxiliary drive motor with the speed of the vehicle, the motor controller 3 obtains the maximum output torque T of the auxiliary drive motor 42 at the current speed. Now, by the formula $T_0 = T * F$, the motor controller 3 calculates the output torque $T_0$ of the auxiliary drive motor 42 and the auxiliary drive motor 42 is controlled to output the output torque $T_0$. The motor controller 3 determines the output torque of the main drive motor 41 by the depressing degree of the accelerator pedal with any means and/or method well known in the art. The output power of the whole vehicle is controlled by the sum of the output torque of the main drive motor 41 and that of the auxiliary drive motor 42. In addition, after controlling the auxiliary drive motor 42 to output the calculated output torque $T_0$, the torque calculating factor $F$ is attenuated to zero to attenuate the output torque of the auxiliary drive motor 42 accordingly. When the torque calculating factor is attenuated to zero, the auxiliary drive motor 42 does not output any torque and enters into a full-time waiting mode. At this time, only the output torque of the main drive motor 41 is used as the power source of the whole vehicle. By the accelerator accelerating control method and the device thereof of present invention, the vehicle can provide quick response to the operator in addition to less energy consumption.

Although explanatory embodiments have been shown and described, it would be appreciated by those skilled in the art that changes, alternatives, and modifications can be made in the embodiments without departing from the principles of the invention. Such changes, alternatives, and modifications all fall into the scope of the claims and their equivalents.

**Claims**

1. A method of controlling an accelerator of a four-wheel drive electric vehicle, comprising the following steps:

   controlling power output of the vehicle by a sum of an output torque of a main drive motor (41) and an output torque of an auxiliary drive motor (42) with the output torque of the main drive motor (41) being determined by a depressing degree ($\gamma$) of an accelerator pedal, wherein the output torque ($T_0$) of the auxiliary drive motor (42) is determined by:

   obtaining a torque calculating factor ($F$) being a cumulative value of an acceleration ($a$) of the accelerator;
   determining a maximum output torque ($T$) of the auxiliary drive motor (42) at a current speed of the vehicle; and
   calculating the output torque ($T_0$) of the auxiliary drive motor (42) varying between 0 and T based on the torque calculating factor ($F$) and the maximum output torque ($T$) of the auxiliary drive motor (42) at the current speed with the output torque ($T_0$) of the auxiliary drive motor (42) being increased as the torque calculating factor ($F$) increases; and

   wherein the step of determining the torque calculating factor ($F$) comprising the following steps:

   obtaining a start depressing degree ($\gamma_1$) of the accelerator pedal and an end depressing degree ($\gamma_0$) of the accelerator pedal in a period ($\Delta T$) of time;
   calculating the accelerator acceleration ($a$) based on a formula of:

   $$a = {\gamma_0 - \gamma_1}\big/{\Delta T};$$

   and
   obtaining the torque calculating factor ($F$) by accumulating the accelerations ($a$) of the accelerator calculated in a continuous plurality of the periods.

2. The method according to claim 1, wherein the period ($\Delta T$) is about 100$\mu$s to 1000$\mu$s, and there are substantially 5000 to 10000 periods to accumulate the accelerations ($a$) of the accelerator.

3. The method according to claim 1, wherein the accumulation of the calculated acceleration (a) of the accelerator is suspended in the plurality of periods and a limitation value is used as the torque calculating factor ($F$) ranging from 0.9 to 1 when the torque calculating factor (F) is equal to or exceeds the limitation value.

4. The method according to claim 1, wherein the step of determining the maximum output torque ($T$) of the auxiliary drive motor (42) at the current speed comprises the following steps:

   obtaining the current speed; and
   determining the maximum output torque ($T$) of the auxiliary drive motor (42) at current speed according to a corresponding curve relationship of the maximum output torque ($T$) and the speed.

5. The method according to claim 1, wherein the output torque ($T_0$) of the auxiliary drive motor (42) is calculated by multiplying the torque calculating factor ($F$) with the maximum output torque ($T$) of the auxiliary drive motor (42) at the current speed according:

   $$T_0 = T * F.$$

6. The method according to claim 1, further comprising a step of attenuating the torque calculating factor ($F$) to zero after controlling the auxiliary drive motor (42) to output the output torque $(T_0)$.

7. An accelerator accelerating control device of a four-wheel drive electric vehicle, comprising:

a sensor (1) for sensing a depressing degree ($\gamma$) of an accelerator pedal;
a speed sensor (2) for detecting a current speed of the electric vehicle;
a motor controller (3) connected with the sensor (1) for sensing the depressing degree ($\gamma$) of the accelerator pedal and the speed sensor (2), for controlling an output torque of a main motor (41) based on the detected depressing degree ($\gamma$) and the current speed and for determining an output torque of an auxiliary drive motor (42) and controlling the output torque thereof with a sum of the output torque of the main motor (41) and the output torque of the auxiliary drive motor (42) being used for controlling the power output of the vehicle, wherein

the control device determines the output torque ($T_0$) of the auxiliary drive motor (42) by:

obtaining a torque calculating factor ($F$) being a cumulative value of an acceleration ($a$) of the accelerator;
determining a maximum output torque ($T$) of the auxiliary drive motor (42) at a current speed of the vehicle; and
calculating the output torque ($T_0$) of the auxiliary drive motor varying between 0 and T based on the torque calculating factor ($F$) and the maximum output torque ($T$) of the auxiliary drive motor (42) at the current speed with the output torque ($T_0$) of the auxiliary drive motor (42) being increased as the torque calculating factor ($F$) increases; and

wherein the torque calculating factor ($F$) is determined by the motor controller (3) by:

obtaining a start depressing degree ($\gamma_1$) of the accelerator pedal and an end depressing degree ($y_0$) of the accelerator pedal in a period ($\Delta T$) of time;
calculating the accelerator acceleration ($a$) based on a formula of:

$$a = \frac{\gamma_0 - \gamma_1}{\Delta T};$$

and
obtaining the torque calculating factor ($F$) by accumulating the accelerations ($a$) of the accelerator calculated in a continuous plurality of the periods.

8. The accelerator accelerating control device according to claim 7, wherein the period ($\Delta T$) is about 100$\mu$s to 1000$\mu$s, and there are substantially 5000 to 10000 periods to accumulate the accelerations ($a$) of the accelerator.

9. The accelerator accelerating control device according to claim 7, wherein the accumulation of the calculated acceleration ($a$) of the accelerator is suspended in the plurality of periods and a limitation value is used as the torque calculating factor ($F$) ranging from 0.9 to 1 when the torque calculating factor ($F$) is equal to or exceeds the limitation value.

10. The accelerator accelerating control device according to claim 7, wherein the motor controller (3) determines the maximum output torque ($T$) of the auxiliary drive motor (42) by:

obtaining the current speed; and
determining the maximum output torque ($T$) of the auxiliary drive motor (42) at current speed according to the corresponding curve relationship of the maximum output torque and the speed.

11. The accelerator accelerating control device according to claim 7, wherein the output torque ($T_0$) of the auxiliary drive motor (42) is calculated by multiplying the torque calculating factor ($F$) with the maximum output torque ($T$) of the auxiliary drive motor (42) at the current speed, according:

$$T_0 = T * F.$$

12. The accelerator accelerating control device according to claim 7, wherein the cumulative torque calculating factor ($F$) is attenuated to zero by the motor controller (3) after controlling the auxiliary drive motor (42) to output the calculated output torque ($T_0$).

**Patentansprüche**

1. Ein Verfahren zum Steuern eines Beschleunigers eines Elektrofahrzeugs mit Vierradantrieb, umfassend die folgenden Schritte:

Steuern der Leistungsabgabe des Fahrzeugs durch eine Summe eines Abtriebsdrehmoments eines Hauptantriebsmotors (41) und eines Abtriebsdrehmoments eines Hilfsantriebsmotors (42), wobei das Abtriebsdrehmoment des Hauptantriebsmotors (41) durch einen Niederdrückgrad ($\gamma$) eines Gaspedals bestimmt wird, wobei das Abtriebsdrehmoment ($T_0$) des Hilfsantriebsmotors (42) bestimmt wird durch:

Ermitteln eines Drehmomentberechnungsfaktors *(F),* der ein kumulativer Wert einer Beschleunigung *(a)* des Beschleunigers ist; Bestimmen eines maximalen Abtriebsdrehmoments *(T)* des Hilfsantriebsmotors (42) bei einer aktuellen Geschwindigkeit des Fahrzeugs; und
Berechnen des zwischen 0 und T variierenden Abtriebsdrehmoments $(T_0)$ des Hilfsantriebsmotors (42) auf Basis des Drehmomentberechnungsfaktors *(F)* und des maximalen Abtriebsdrehmoments *(T)* des Hilfsantriebsmotors (42) bei der aktuellen Geschwindigkeit, wobei das Abtriebsdrehmoment $(T_0)$ des Hilfsantriebsmotors (42) erhöht wird, wenn der Drehmomentberechnungsfaktor *(F)* steigt; und

wobei der Schritt des Bestimmens des Drehmomentberechnungsfaktors *(F)* die folgenden Schritte umfasst:

Ermitteln eines Ausgangs-Niederdrückgrads $(\gamma_1)$ des Gaspedals und eines End-Niederdrückgrads $(y_0)$ des Gaspedals in einem Zeitraum $(\Delta T)$;
Berechnen der Beschleunigung *(a)* des Beschleunigers auf Basis folgender Formel:

$$a = \frac{\gamma_0 - \gamma_1}{\Delta T};$$

und
Ermitteln des Drehmomentberechnungsfaktors *(F)* durch Akkumulieren der Beschleunigungen *(a)* des Beschleunigers, die in einer ununterbrochenen Vielzahl an Zeiträumen berechnet wurden.

2. Das Verfahren nach Anspruch 1, wobei der Zeitraum $(\Delta T)$ etwa 100 μs bis 1.000 μs beträgt und wobei im Wesentlichen 5.000 bis 10.000 Zeiträume zum Akkumulieren der Beschleunigungen *(a)* des Beschleunigers verwendet werden.

3. Das Verfahren nach Anspruch 1, wobei die Akkumulation der berechneten Beschleunigung *(a)* des Beschleunigers in der Vielzahl von Zeiträumen ausgesetzt wird und ein Begrenzungswert als Drehmomentberechnungsfaktor *(F)* verwendet wird, der von 0,9 bis 1 reicht, wenn der Drehmomentberechnungsfaktor *(F)* gleich dem Begrenzungswert ist oder diesen übersteigt.

4. Das Verfahren nach Anspruch 1, wobei der Schritt des Bestimmens des maximalen Abtriebsdrehmoments *(T)* des Hilfsantriebsmotors (42) bei der aktuellen Geschwindigkeit die folgenden Schritte umfasst:

Ermitteln der aktuellen Geschwindigkeit; und
Bestimmen des maximalen Abtriebsdrehmoments *(T)* des Hilfsantriebsmotors (42) bei der aktuellen Geschwindigkeit gemäß einer entsprechenden Kurvenbeziehung zwischen dem maximalen Abtriebsdrehmoment *(T)* und der Geschwindigkeit.

5. Das Verfahren nach Anspruch 1, wobei das Abtriebsdrehmoment $(T_0)$ des Hilfsantriebsmotors (42) berechnet wird, indem der Drehmomentberechnungsfaktor (F) mit dem maximalen Abtriebsdrehmoment *(T)* des Hilfsantriebsmotors (42) bei der aktuellen Geschwindigkeit multipliziert wird, und zwar gemäß:

$$T_0 = T * F.$$

6. Das Verfahren nach Anspruch 1, ferner umfassend einen Schritt des Abschwächens des Drehmomentberechnungsfaktors *(F)* auf null, nachdem der Hilfsantriebsmotor (42) derart gesteuert wurde, dass er das Abtriebsdrehmoment $(T_0)$ ausgibt.

7. Eine Vorrichtung zur Steuerung der Beschleunigung eines Beschleunigers eines Elektrofahrzeugs mit Vierradantrieb, umfassend:

einen Sensor (1) zum Erfassen eines Niederdrückgrads $(\gamma)$ eines Gaspedals;
einen Geschwindigkeitssensor (2) zum Detektieren einer aktuellen Geschwindigkeit des Elektrofahrzeugs;
eine Motorsteuereinrichtung (3), die mit dem Sensor (1) zum Erfassen des Niederdrückgrads $(\gamma)$ des Gaspedals und dem Geschwindigkeitssensor (2) verbunden ist, um ein Abtriebsdrehmoment eines Hauptmotors (41) auf Basis des detektierten Niederdrückgrads $(\gamma)$ und der aktuellen Geschwindigkeit zu steuern und um ein Abtriebsdrehmoment eines Hilfsantriebsmotors (42) zu bestimmen und dessen Abtriebsdrehmoment zu steuern, wobei eine Summe des Abtriebsdrehmoments des Hauptmotors (41) und des Abtriebsdrehmoments des Hilfsantriebsmotors (42) verwendet wird, um die Leistungsabgabe des Fahrzeugs zu steuern, wobei

die Steuerungseinrichtung das Abtriebsdrehmoment $(T_0)$ des Hilfsantriebsmotors (42) bestimmt durch:

Ermitteln eines Drehmomentberechnungsfaktors *(F),* der ein kumulativer Wert einer Beschleunigung *(a)* des Beschleunigers ist;
Bestimmen eines maximalen Abtriebsdrehmoments (T) des Hilfsantriebsmotors (42) bei einer aktuellen Geschwindigkeit des Fahrzeugs; und Berechnen des zwischen 0 und T variierenden Abtriebsdrehmoment *(T$_0$)* des Hilfsantriebsmotors auf Basis des Drehmomentberechnungsfaktors *(F)* und des maximalen Abtriebsdrehmoments (T) des Hilfsantriebsmotors (42) bei der aktuellen Geschwindigkeit, wobei das Abtriebsdrehmoment *(T$_0$)* des Hilfsantriebsmotors (42) erhöht wird, wenn der Drehmomentberechnungsfaktor (F) steigt; und

wobei der Drehmomentberechnungsfaktor (F) durch die Motorsteuereinrichtung (3) bestimmt wird durch:

Ermitteln eines Ausgangs-Niederdrückgrads *(γ$_1$)* des Gaspedals und eines End-Niederdrückgrads *(γ$_0$)* des Gaspedals in einem Zeitraum *(ΔT)*;
Berechnen der Beschleunigung *(a)* des Beschleunigers auf Basis folgender Formel:

$$ a = \frac{\gamma_0 - \gamma_1}{\Delta T}; $$

und
Ermitteln des Drehmomentberechnungsfaktors *(F)* durch Akkumulieren der Beschleunigungen *(a)* des Beschleunigers, die in einer ununterbrochenen Vielzahl an Zeiträumen berechnet wurden.

**8.** Die Vorrichtung zur Steuerung der Beschleunigung eines Beschleunigers nach Anspruch 7, wobei der Zeitraum *(ΔT)* etwa 100 μs bis 1.000 μs beträgt und wobei im Wesentlichen 5.000 bis 10.000 Zeiträume zum Akkumulieren der Beschleunigungen *(a)* des Beschleunigers verwendet werden.

**9.** Die Vorrichtung zur Steuerung der Beschleunigung eines Beschleunigers nach Anspruch 7, wobei die Akkumulation der berechneten Beschleunigung *(a)* des Beschleunigers in der Vielzahl von Zeiträumen ausgesetzt wird und ein Begrenzungswert als Drehmomentberechnungsfaktor (F) verwendet wird, der von 0,9 bis 1 reicht, wenn der Drehmomentberechnungsfaktor *(F)* gleich dem Begrenzungswert ist oder diesen übersteigt.

**10.** Die Vorrichtung zur Steuerung der Beschleunigung eines Beschleunigers nach Anspruch 7, wobei die Motorsteuereinrichtung (3) das maximale Abtriebsdrehmoment (T) des Hilfsantriebsmotors (42) bestimmt durch:

Ermitteln der aktuellen Geschwindigkeit; und Bestimmen des maximalen Abtriebsdrehmoments (T) des Hilfsantriebsmotors (42) bei der aktuellen Geschwindigkeit gemäß der entsprechenden Kurvenbeziehung zwischen dem maximalen Abtriebsdrehmoment und der Geschwindigkeit.

**11.** Die Vorrichtung zur Steuerung der Beschleunigung eines Beschleunigers nach Anspruch 7, wobei das Abtriebsdrehmoment *(T$_0$)* des Hilfsantriebsmotors (42) berechnet wird, indem der Drehmomentberechnungsfaktor (F) mit dem maximalen Abtriebsdrehmoment (T) des Hilfsantriebsmotors (42) bei der aktuellen Geschwindigkeit multipliziert wird, und zwar gemäß:

$$ T_0 = T \star F. $$

**12.** Die Vorrichtung zur Steuerung der Beschleunigung eines Beschleunigers nach Anspruch 7, wobei der kumulative Drehmomentberechnungsfaktor *(F)* durch die Motorsteuereinrichtung (3) auf null abgeschwächt wird, nachdem der Hilfsantriebsmotor (42) derart gesteuert wurde, dass er das Abtriebsdrehmoment *(T$_0$)* ausgibt.

**Revendications**

**1.** Un procédé de commande d'un accélérateur d'un véhicule électrique à quatre roues motrices, comprenant les étapes suivantes consistant à :

commander une sortie de puissance du véhicule par une somme d'un couple de sortie d'un moteur d'entraînement principal (41) et d'un couple de sortie d'un moteur d'entraînement auxiliaire (42) avec le couple de sortie du moteur d'entraînement principal (41) étant déterminé par un degré de pression *(γ)* sur une pédale d'accélérateur, dans lequel le couple de sortie (T$_0$) du moteur d'entraînement auxiliaire (42) est déterminé par :

obtenir un facteur de calcul de couple (F) étant une valeur cumulative d'une accélération *(a)* de l'accélérateur ;
déterminer un couple de sortie maximale (T) du moteur d'entraînement auxiliaire (42) à une vitesse actuelle du véhicule ; et calculer le couple de sortie (T$_0$) du moteur d'entraînement auxiliaire (42) variant entre 0 et T sur la base du facteur de calcul de couple (F) et du couple de sortie maximale (T) du moteur d'entraînement auxiliaire (42) à la vitesse actuelle avec le couple de sortie ($T_0$) du moteur d'entraînement auxiliaire (42) étant augmenté lorsque le facteur de calcul de couple (F) augmente ; et

dans lequel l'étape de détermination du facteur de calcul de couple(F) comprend les étapes suivantes consistant à :

obtenir un degré de pression de départ ($\gamma 1$) sur la pédale d'accélérateur et un degré de pression de fin ($\gamma 0$) sur la pédale d'accélérateur dans une période de temps ($\Delta T$) ;
calculer l'accélération d'accélérateur (*a*) sur la base de la formule de :

$$a = \frac{\gamma_0 - \gamma_1}{\Delta T} ;$$

et

obtenir le facteur de calcul de couple (F) en accumulant les accélérations (*a*) de l'accélérateur calculées dans une pluralité continue de périodes.

2. Le procédé selon la revendication 1, dans lequel la période ($\Delta T$) est d'environ 100$\mu$s à 1000$\mu$s et il y a substantiellement 5000 à 10 000 périodes pour accumuler les accélérations (*a*) de l'accélérateur.

3. Le procédé selon la revendication 1, dans lequel l'accumulation de l'accélération calculée (*a*) de l'accélérateur est suspendue dans la pluralité de périodes et une valeur de limitation est utilisée comme le facteur de calcul de couple (F) allant de 0.9 à 1 lorsque le le facteur de calcul de couple (F) est égal à ou excède la valeur de limitation.

4. Le procédé selon la revendication 1, dans lequel l'étape de détermination du couple de sortie maximale (T) du moteur d'entraînement auxiliaire (42) à la vitesse actuelle comprend les étapes suivantes consistant à :

obtenir la vitesse actuelle ; et
déterminer le couple de sortie maximal (T) du moteur d'entraînement auxiliaire (42) à la vitesse actuelle selon une relation de courbe correspondante du couple de sortie maximal (T) et de la vitesse.

5. Le procédé selon la revendication 1, dans lequel le couple de sortie ($T_0$) du moteur d'entraînement auxiliaire (42) est calculé en multipliant le facteur de calcul de couple (F) avec le couple de sortie maximal (T) du moteur d'entraînement auxiliaire (42) à la vitesse actuelle selon :

$$T_0 = T * F .$$

6. Le procédé selon la revendication 1, comprenant en outre une étape d'atténuation du facteur de calcul de couple (F) à zéro après la commande du moteur d'entraînement auxiliaire (42) afin de délivrer le couple de sortie ($T_0$).

7. Un dispositif de commande d'accélération d'accélérateur d'un véhicule électrique à quatre roues motrices, comprenant :

un capteur (1) pour détecter un degré ($\gamma$) de pression sur une pédale d'accélérateur ;
un capteur de vitesse (2) pour détecter une vitesse actuelle du véhicule électrique ;
un contrôleur de moteur (3) connecté au capteur (1) pour détecter le degré de pression ($\gamma$) sur la pédale d'accélérateur et le capteur de vitesse (2), pour commander un couple de sortie d'un moteur principal (41) sur la base du degré de pression détecté ($\gamma$) et de la vitesse actuelle et pour déterminer un couple de sortie d'un moteur d'entraînement auxiliaire (42) et commander le couple de sortie de ce dernier avec une somme du couple de sortie du moteur principal (41) et du couple de sortie du moteur d'entraînement auxiliaire (42) étant utilisé pour commander la sortie de puissance du véhicule, dans lequel

le dispositif de commande détermine le couple de sortie ($T_0$) du moteur d'entraînement auxiliaire (42) en:

obtenant un facteur de calcul de couple (F) étant une valeur cumulative d'une accélération (*a*) de l'accélérateur ;
déterminant un couple de sortie maximale (T) du moteur d'entraînement auxiliaire (42) à une vitesse actuelle du véhicule ; et
calculant le couple de sortie ($T_0$) du moteur d'entraînement auxiliaire (42) variant entre 0 et T sur la base du facteur de calcul de couple (F) et du couple de sortie maximale (T) du moteur d'entraînement auxiliaire (42) à la vitesse actuelle avec le couple de sortie ($T_0$) du moteur d'entraînement auxiliaire (42) étant augmenté lorsque le facteur de calcul de couple (F) augmente ; et

dans lequel le facteur de calcul de couple(F) est déterminé par le contrôleur de moteur (3) en :

obtenant un degré de pression de départ ($\gamma 1$) sur la pédale d'accélérateur et un degré de pression de fin ($\gamma 0$) sur la pédale d'accélérateur dans une période de temps ($\Delta T$) ;

calculant l'accélération d'accélérateur (*a*) sur la base de la formule de :

$$a = \frac{\gamma_0 - \gamma_1}{\Delta T};$$

et

obtenant le facteur de calcul de couple (F) en accumulant les accélérations (*a*) de l'accélérateur calculées dans une pluralité continue de périodes.

8. Le dispositif de commande d'accélération d'accélérateur selon la revendication 7, dans lequel la période ($\Delta$T) est d'environ 100$\mu$s à 1000$\mu$s et il y a substantiellement 5000 à 10 000 périodes pour accumuler les accélérations (*a*) de l'accélérateur.

9. Le dispositif de commande d'accélération d'accélérateur selon la revendication 7, dans lequel l'accumulation de l'accélération calculée (*a*) de l'accélérateur est suspendue dans la pluralité de périodes et une valeur de limitation est utilisée comme le facteur de calcul de couple (F) allant de 0.9 à 1 lorsque le facteur de calcul de couple (F) est égal à ou excède la valeur de limitation.

10. Le dispositif de commande d'accélération d'accélérateur selon la revendication 7, dans lequel le contrôleur de moteur (3) détermine le couple de sortie maximal (T) du moteur d'entraînement auxiliaire (42) en :

   obtenant la vitesse actuelle ; et
   déterminant le couple de sortie maximal (T) du moteur d'entraînement auxiliaire (42) à la vitesse actuelle selon une relation de courbe correspondante du couple de sortie maximal et de la vitesse.

11. Le dispositif de commande d'accélération d'accélérateur selon la revendication 7, dans lequel le couple de sortie ($T_0$) du moteur d'entraînement auxiliaire (42) est calculé en multipliant le facteur de calcul de couple (F) avec le couple de sortie maximal (T) du moteur d'entraînement auxiliaire (42) à la vitesse actuelle selon :

$$T_0 = T * F.$$

12. Le dispositif de commande d'accélération d'accélérateur selon la revendication 7, dans lequel le facteur de calcul de couple cumulatif (F) est atténué à zéro par le contrôleur de moteur après la commande du moteur d'entraînement auxiliaire (42) pour délivrer le couple de sortie calculé ($T_0$).

```
┌─────────────────────────────────┐
│ Determining    the    torque    │
│ calculation factor  F           │
└─────────────────────────────────┘
              │
              ▼
┌─────────────────────────────────┐
│ Determining the maximum output  │
│ torque  T of the auxiliary drive│
│ motor at present speed          │
└─────────────────────────────────┘
              │
              ▼
```

| Determining the output torque of the main drive motor according to the accelerator depth | Determining the output torque $T_0$ of the auxiliary drive motor according to F and T |
|---|---|

```
              │                          │
              ▼                          ▼
┌─────────────────────────────────────────────────────────┐
│ Controlling the output power of the whole vehicle        │
│ according to the sum of the output torque of the main    │
│ drive motor and the auxiliary drive motor                │
└─────────────────────────────────────────────────────────┘
```

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0622264 A2
- WO 2007141980 A1